# EUROPEAN PATENT SPECIFICATION

(11) **EP 1 905 694 B1**
(45) Date of publication and mention of the grant of the patent: **08.06.2011**
(21) Application number: 07117378.5
(22) Date of filing: 27.09.2007
(51) Int. Cl.: B65B 25/00, B65B 55/18, A23C 19/097, A23L 1/00, A23L 3/3418, A23L 3/3445, A23P 1/02, B65B 25/06

(54) **Machine and method for packaging a grated food product**
Maschine und Verfahren zur Verpackung eines geriebenen Lebensmittels
Machine et procédé d'emballage d'un produit alimentaire râpé

(30) Priority: 29.09.2006 IT UD20060218
(43) Date of publication of application: 02.04.2008
(73) Proprietor: Gelmini, Antonio, 43030 Basilicanova Montechiarugolo (IT)
(72) Inventor: Gelmini, Antonio, 43030 Basilicanova Montechiarugolo (IT)
(74) Representative: Petraz, Gilberto Luigi

(56) References cited:
- EP-A- 0 559 126
- WO-A-02/21946
- DE-A1- 2 308 412
- US-A- 4 753 815
- US-A- 5 660 871

## Description

### FIELD OF THE INVENTION

The present invention concerns a machine and the relative method for packaging, in envelopes or rigid containers, a gratable food product, such as for example cheese, bread, chocolate or other, starting from pieces or slices of determinate size. In particular, the machine and the method according to the present invention concern the blowing of a gas onto the grated product in order to improve and increase its shelf-life.

In the following description, by grated food product we mean a food product subjected to a processing treatment, or granulation, which reduces it to scales, strips, granules, powder or other crumbled forms.

### BACKGROUND OF THE INVENTION

It is known that, in order to limit as much as possible the proliferation of aerobic bacteria, and hence the formation of mold or other potentially noxious micro-organisms, in a food product packaged in grated form, such as for example cheese, bread, chocolate or other, the grated product, at the same time as it is packaged in a packaging station, has an inert gas blown onto it, such as for example nitrogen, carbon dioxide or mixtures thereof. This allows to substantially eliminate the oxygen from the package, considerably reducing the growth of aerobic bacteria.

The method for packaging and simultaneous blowing, known by the acronym MAP (Modified Atmosphere Protection), in the event of packaging in a protected environment of a determinate mass of grated food product, provides to blow the inert gas directly onto the mass of grated product and simultaneously to package it in an envelope, tub or tin, at the packaging station.

However, the known solution, by blowing the inert gas at the moment of packaging, does not guarantee the uniform spread of the gas over the whole mass of the grated food product, leaving some parts of it, particularly the central parts of the mass, rich in oxygen, and hence defining a favorable environment for the growth of aerobic bacteria.

This disadvantage entails, over time, a deterioration in the quality and organoleptic characteristics of the various parts of the mass of food product that differs from the inside and the outside, reducing the overall duration of the shelf life of the packaged grated product.

Moreover, the common methods for grating and packaging a food product provide not only an initial step of granulation of a compact mass of food product, but also a step of sifting in order to select the grain size of the grated product, and a packaging step in which the sifted mass of grated food product is disposed in the package, at the same time as the inert gas is blown onto it.

However, the known method provides to keep the food product in an atmosphere rich in oxygen from the granulation step to the packaging step when the inert gas is blown onto it. This condition allows particles of oxygen to infiltrate into the interstices of the granules of the food product, and to incorporate themselves therein, so that it is difficult to remove them with the inert gas during the simultaneous step of blowing and packaging. This promotes, although only to a limited degree, the proliferation of aerobic bacteria, molds and other noxious micro-organisms.

This disadvantage entails a further lowering of the aseptic conditions of the packaging, thus further reducing the shelf life of the packaged food product.

Purpose of the present invention is to achieve a machine, and to perfect a method, for packaging a grated food product, which guarantee the formation of a protected atmosphere in order to prevent the proliferation of bacteria and noxious micro-organisms in the food product and to allow more aseptic conditions of the packaging with respect to the state of the art, and improve the conditions of preservation and the duration of the shelf life of the grated product.

The Applicant has devised, tested and embodied the present invention to overcome the shortcomings of the state of the art (see e.g. US Patent 4 753 815) and to obtain these and other purposes and advantages.

### SUMMARY OF THE INVENTION

The present invention is set forth and characterized in the respective independent claims, while the relative dependent claims describe other characteristics of the present invention or variants to the main inventive idea.

In accordance with the above purpose, a machine for packaging a grated food product according to the present invention comprises at least a granulation station suitable for grating to the desired form a determinate compact mass of food product, and a packaging station which deposits a mass of grated food product in a determinate package and provides to close the package.

The packaging machine comprises a unit for blowing gas, such as nitrogen, carbon dioxide, ozone or mixtures thereof, able to blow the gas uniformly onto the food product so as to achieve an environment that prevents the proliferation of bacteria and other noxious micro-organisms.

According to a characteristic feature of the present invention, the blowing unit is associated with the granulation station, and in any case upstream of the packaging station, so that the grated product enters into the packaging station when the gas has already been blown onto it.

According to the invention, it is advantageous that the blowing unit is able to blow the gas inside the granulation station and simultaneously with the granulation of the food product, so that it is treated with the gas while it is being granulated.

According to one embodiment of the invention, the gas is an inert gas, such as nitrogen or carbon dioxide, able to achieve a modified and saturated atmosphere, substantially oxygen-free, which prevents the proliferation of aerobic bacteria.

According to a variant, the gas is a gas with bactericidal and/or bacteriostatic and/or anti-bacterial properties, such as for example a gas comprising ozone, which eliminates and prevents the growth of aerobic and anaerobic bacteria, and other noxious micro-organisms.

In this way it is possible to eliminate substantially completely the presence of oxygen in the whole mass of grated food product or, in any case, to render the environment extremely unfavorable to the proliferation of bacteria and noxious micro-organisms.

If the gas is blown at the same time as granulation is performed, advantageously during the granulation operation conditions of turbulence are created in the grated food product and the surface of the food product made available for treatment is greatly increased, so that the grated food product is hit by the flow of gas, preventing or in any case reducing the risk that part of the grated mass might remain excluded from the blowing treatment.

This solution allows to treat the whole mass of grated food product uniformly with the gas, increasing the overall duration of the shelf life of the product.

Moreover, the present invention allows to eliminate substantially completely the oxygen present in the individual grains and therefore in the final package, substantially replacing it with the gas blown in, so as to prevent the oxygen infiltrating and incorporating into the interstices of the grains of the food product or in any case to prevent creating an environment favorable to the proliferation of bacteria. In this way the proliferation of bacteria, the formation of mold and other noxious micro-organisms are reduced.

When an inert gas is used, the growth of aerobic bacteria in particular is limited, whereas when a bactericidal gas is used, such as ozone, aerobic and anaerobic bacteria are affected.

According to a variant, the packaging machine allows, finally, to package the grated product previously treated with the gas in a protected atmosphere, that is, by using a second gas blowing unit, at the packaging station, obtaining the packaged product, closed, in a protected atmosphere.

With the present invention the grated food product, when it is packaged, has already been treated, or subjected to gas blowing, so that the mass of packaged food product, irrespective of the quantity and/or form that it assumes in the package, is uniformly treated with the gas, thus giving a longer-lasting preservation, even up to 8-9 months, of its quality and organoleptic characteristics.

In a preferential form of embodiment, the machine according to the invention has at least a transfer pipe, by means of which the grated food product, treated with the gas, is transported from one operating station to the other. The transfer pipe is able to guarantee that, inside it, an atmosphere sufficiently saturated with the gas blown in the granulation station is maintained, so as to keep the grated food product in a controlled atmosphere, which prevents the proliferation of bacteria and noxious micro-organisms, as far as the packaging station, and hence to guarantee that it is packaged in the best aseptic conditions.

The gas can be blown in even after granulation, for example along the transfer pipe, and in any case before the packaging step. In this case it is preferable to create a turbulence in the grated food product, so as to treat the whole mass of the grated food product uniformly with the gas and obtain the advantageous preservation effect described above.

According to a variant, the machine comprises a shearing member disposed downstream of the granulation member and in any case inside the grating tank, in order to further crush the grated product and to guarantee a substantially uniform granulometry.

In this case, the blowing unit is disposed downstream of the granulation member and upstream of the shearing member.

According to a variant, the blowing unit is disposed in correspondence with the shearing member.

### BRIEF DESCRIPTION OF THE DRAWINGS

These and other characteristics of the present invention will become apparent from the following description of some preferential forms of embodiment, given as a non-restrictive example with reference to the attached drawings wherein:
- fig. 1 is a schematic lateral view of a first form of embodiment of a machine for packaging a gratable food product according to the present invention;
- fig. 2 is a block diagram of a method for packaging a gratable food product according to the present invention;
- fig. 3 is a schematic lateral view of a second form of embodiment of a machine for packaging a gratable food product according to the present invention.

### DETAILED DESCRIPTION OF A PREFERENTIAL FORM OF EMBODIMENT

With reference to the attached drawings, a machine 10 according to the present invention is able to grate, sieve and package a determinate mass of food product, in this case cheese.

The machine 10 according to the present invention comprises, disposed substantially in series, a granulation station 11, a sieving station 12 and a packaging station 13, connected with each other by a transfer pipe 15 able to transport the grated cheese from one of said stations 11, 12 and 13 to another.

A plurality of nozzles 16, shown only schematically in the drawings, are associated, advantageously integrated, with the granulation station 11, and in any case before the sieving station 12 and packaging station 13. The nozzles 16 are able to blow a gas onto the cheese while the latter is being grated, in order to prevent the proliferation of bacteria and other noxious micro-organisms.

According to one form of embodiment of the invention, said gas is an inert gas, such as nitrogen, carbon dioxide or mixtures thereof, with the function of creating an oxygen-free atmosphere.

The inert gas blown by the nozzles 16 makes the atmosphere inside the granulation station 11 substantially saturated with gas, substantially eliminating the oxygen, which is replaced precisely by the gas blown in.

The atmosphere that is created is thus unfavorable for the proliferation of bacteria and noxious micro-organisms, especially aerobic bacteria. In this case, the transfer pipe 15 is able to transport the grated food product in substantially oxygen-free conditions.

An advantageous variant of the invention provides that said gas is a gas which not only saturates the environment, but also has bacteriostatic, bactericidal or anti-bacterial functions, able not only to limit the growth of aerobic bacteria, but also to condition and possibly kill aerobic and anaerobic bacteria or other noxious micro-organisms.

A bactericidal, disinfecting and sterilizing gas used in this variant of the invention is ozone. Therefore, a gas can be used which comprises ozone, or a mixture of inert gas and ozone, or a mixture of air and ozone or oxygen and ozone or an aqueous mixture of ozone. In this case it is not indispensable for the atmosphere to be totally oxygen-free, because the ozone treatment in any case eliminates and prevents the proliferation of aerobic and also anaerobic bacteria, and other noxious micro-organisms.

Advantageously, the transfer pipe 15 may in any case be able to keep an oxygen-free atmosphere, in order to increase the aseptic conditions of the grated food product.

The gas can be blown in under pressure, or at environmental pressure, according to necessity.

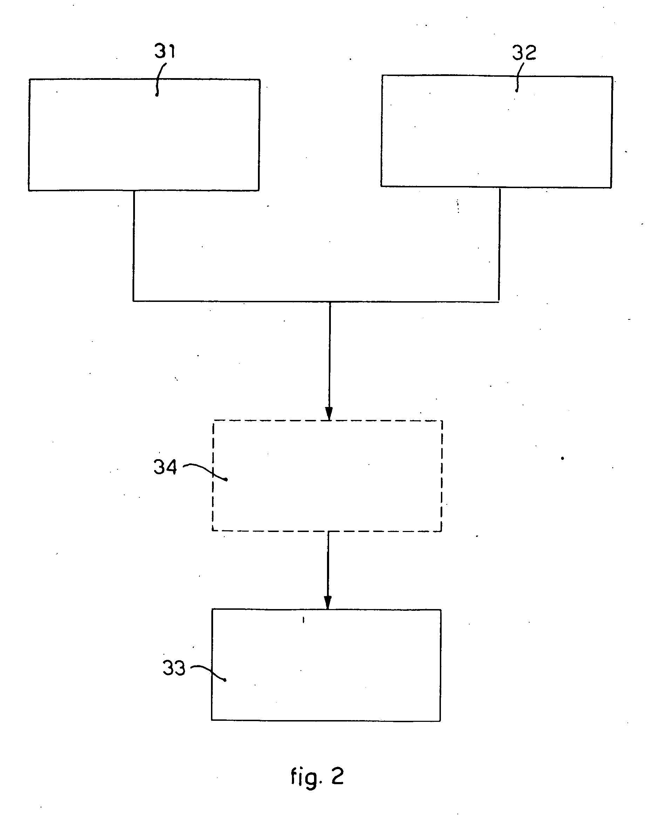

In particular, the granulation station 11 is suitable to perform a granulation step 31 of the method according to the present invention (fig. 2), in which a plurality of pieces or slices of cheese, or whole cheeses, are grated as desired.

The granulation station 11 comprises a loading aperture 17, through which the pieces or slices or whole cheeses to be grated are introduced, a grating drum 19, mounted rotary in a grating tank 28 and externally provided with abrasive elements, a thrust actuator 20 and a funnel 21 to discharge the grated cheese.

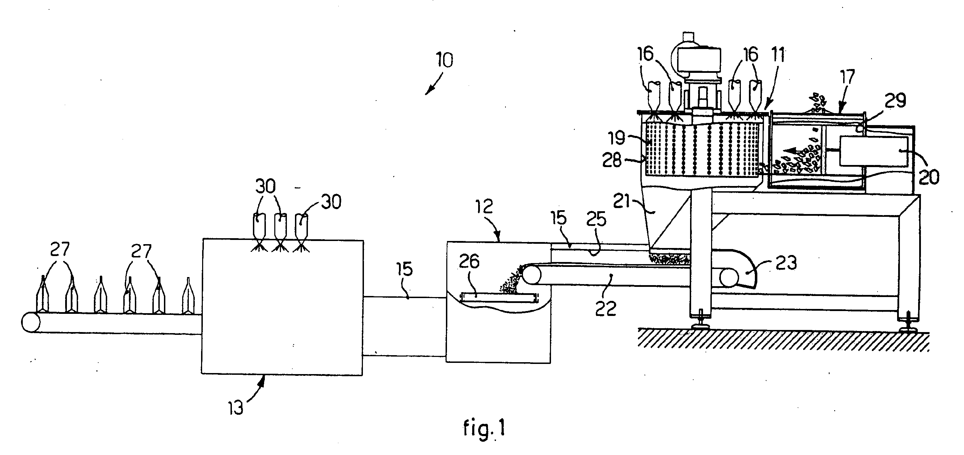

The blowing nozzles 16 are disposed on the upper part of the granulation station 11, in this case near the grating drum 19 (fig. 1).

The blowing nozzles 16 are associated with a protective screen, for example made of Plexiglas, mounted above the grating tank 28, so that there are no unwanted infiltrations of oxygen, or only very limited infiltrations, during the granulation operation.

The nozzles 16 have their respective outlets opening into the grating tank 28 and face towards the product that is being grated and that has just been grated by the grating drum 19, so as to effect a uniform blowing step 32 of the gas directly onto the cheese while it is being grated.

In the granulation station 11, the pieces or slices or whole cheeses are introduced through the loading aperture 17 into a loading chamber 29, in this case adjacent to the grating tank 28, they are pressed by the thrust actuator 20 against an external surface of the grating drum 19 and, at the same time, the gas is blown onto them, in order to obtain therefrom a plurality of grains treated with the gas, of a desired shape and granulometry, according to the sizes and shape of the abrasive elements of the grating drum 19.

According to a variant, a continuous loading is provided of the pieces or slices or whole cheeses through a loading pipe, not shown in the drawings.

The grains or grated cheese thus produced and blown on by the gas fall due to gravity through the funnel 21 and enter into the transfer pipe 15.

Moreover, since the funnel 21 and the transfer pipe 15 are connected in a substantially fluid-tight manner, during the whole route that goes from the exit of the granulation station 11 to the packaging station 13, the atmosphere is kept substantially saturated with gas and advantageously oxygen-free.

This atmosphere, substantially saturated with gas and advantageously oxygen-free, thus guarantees the packaging of the grated cheese in a protected atmosphere, which prevents the proliferation of bacteria and noxious micro-organisms.

The transfer pipe 15 in this case comprises a conveyor belt 22 on which the mass of grated cheese is progressively deposited.

Moreover, the transfer pipe 15 is provided with a hermetic cover 23, disposed above the conveyor belt 22, and able to define with the conveyor belt 22 an internal compartment 25 to transfer the grated cheese.

Therefore, the internal compartment 25 is sealed and, during use, substantially saturated with gas and advantageously oxygen-free.

According to a variant, further nozzles for blowing the gas, not shown in the drawings, are also disposed along the transfer pipe 15, which assist in maintaining the substantially gas-saturated atmosphere and in the subsequent packaging.

The sieving station 12 and the packaging station 13 are of the substantially known type and will not be described in detail here.

Simply to give a non-restrictive example, in this case the sieving station 12 is able to perform a sieving step 34 of the method according to the invention, shown by dashes in fig. 2.

The sieving station 12 comprises at least a sieve 26, shown only schematically in fig. 1, which allows to select the size of the various grains which make up the mass of grated cheese, so as to package a mass of grated cheese consisting of grains of a substantially uniform size and to define packaging categories of different sizes.

The packaging station 13 is suitable to perform a packaging step 33 of the method according to the present invention, in this case in a protected atmosphere, that is, substantially saturated with gas and advantageously oxygen-free, and can be without distinction of the type able to package a determinate quantity of grated and sifted cheese, packing it in bags 27, as shown schematically in fig. 1, and/or tubs, or by putting it into specific tins.

In this case, the packaging station 13 comprises other nozzles 30 which are able to blow in the gas, according to necessity an inert gas, or ozone, or a mixture thereof, also onto the grated product being packaged, under pressure, or at environmental pressure, so as to keep a controlled atmosphere inside the package too.

Advantageously, by blowing gas into the packaging station 13, in the case of tubs or containing structures, for example made of plastic, a determinate internal super pressure is conferred on them, so as to have structural characteristics of rigidity and so as to be easily stored and handled.

According to a variant, the packaging machine 10 according to the invention can be integrated or in any case associated with a sterile packaging apparatus of a known type, the so-called sterile chamber, in which the food product is packaged in extremely sterile and aseptic conditions.

In this case, the packaging in a sterile environment, that is, in the sterile chamber, if used downstream of the ozone treatment which eliminates the noxious bacteria and micro-organisms, may be not of the type in a protected atmosphere, making the use of the second nozzles 30 optional.

The use of the latter may in any case be maintained, in the case of tubs or containing structures, so as to obtain the internal super pressure.

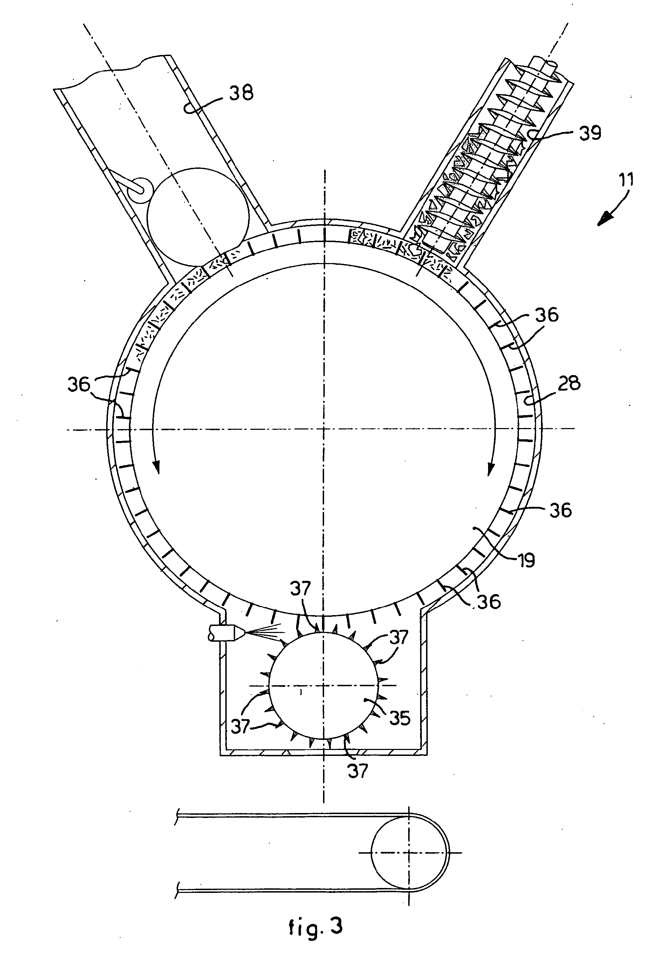

According to the form of embodiment shown in fig. 3, the granulation station 11 of the machine 10 comprises, inside the grating tank 28 itself, both the grating drum 19 and also a shearing roller 35 disposed downstream of the drum 19.

In this case, the grating drum 19 has a circular external surface provided with a plurality of radial abrasion spokes 36 able to perform the granulation.

The shearing roller 35 comprises radially a plurality of blades 37 which crush and crumble the parts of cheese that are not perfectly granulated by the grating drum 19, making them uniform in size with the others.

In this form of embodiment, two introduction pipes are also provided, respectively a first 38 and a second 39. In particular, the first introduction pipe 38 is able to introduce the cheese pulp into the grating tank 28, while the second introduction pipe 39 is able to introduce the cheese crusts into the grating tank 28.

In this case, the nozzles 16 are disposed with respect to the grating tank 28 in such a manner as to deliver the inert gas in correspondence with the zone comprised between the grating drum 19 and the shearing roller 35.

The inert gas blown by the nozzles 16 renders the atmosphere inside the grating tank 28 substantially saturated with gas, substantally eliminating the oxygen, which is replaced precisely by the gas blown in.

It is clear, however, that modifications and/or additions of parts or steps may be made to the machine 10 and the method as described heretofore, without departing from the field and scope of the present invention.

For example, it comes within the field of the present invention to provide that the nozzles 16 are disposed, with respect to the grating tank 28, in such a manner as to deliver the inert gas in correspondence with the shearing roller 35.

It is also clear that, although the present invention has been described with reference to specific examples, a person of skill in the art shall certainly be able to achieve many other equivalent forms of machine and method for packaging a gratable food product, having the characteristics as set forth in the claims and hence all coming within the field of protection defined thereby.

## Claims

1. Machine for packaging a grated food product comprising at least a granulation station (11) conformed for grating a determinate compact mass of said food product, a packaging station (13) which disposes a mass of grated and sifted food product in a determinate package (27) and a unit (16) for blowing a gas, which is associated with said granulation station (11) and in any case upstream of said packaging station (13), and is able to blow said gas uniformly onto the product, before it is packaged, **characterized in that** said blowing unit (16) is directly integrated with said granulation station (11), in order to blow said gas onto said product, at least while said product is being subjected to grating in said granulation station (11), so as to achieve an environment that prevents the proliferation of bacteria and other noxious micro-organisms, said machine also comprising at least a transfer pipe (15) able to guarantee that an atmosphere substantially saturated with said gas is maintained inside said pipe (15), and also able to transport said food product, grated and subjected to blowing by said gas, from said granulation station (11) to said packaging station (13).

2. Machine as in claim 1, **characterized in that** said granulation station (11) comprises a grating tank (28) in which a granulation means (19) is disposed, able to granulation or grate said food product, and in which said blowing unit (16) is able to be directly connected in a substantially fluid-tight manner with said grating tank (28), in order to blow said gas into said grating tank (28) at the same time as said food product is granulated.

3. Machine as in any claim Hereinbefore, **characterized in that** said blowing unit comprises one or more nozzles (16) able to be directed towards said food product and able to blow said gas onto said food product.

4. Machine as in claim 3, **characterized in that** said nozzles (16) are able to be opened inside said granulation station (11).

5. Machine as in any claim hereinbefore, **characterized in that** said transfer pipe (15) comprises a conveyor belt (22) on which said grated food product is progressively deposited, and a hermetic cover element (23), associated with said conveyor belt (22), in order to define an internal compartment (25) for the transfer of said grated food product.

6. Machine as in any claim hereinbefore, **characterized in that** said gas comprises one or more gases chosen from a group comprising carbon dioxide, nitrogen, ozone or mixtures thereof.

7. Machine as in any claim from 1 to 5, **characterized in that** said gas is an inert gas chosen from a group comprising carbon dioxide, nitrogen or mixtures thereof.

8. Machine as in any claim from 1 to 5, **characterized in that** said gas is a gas with bacteriostatic, bactericidal and/or anti-bacterial functions.

9. Machine as in claim 8, **characterized in that** said gas comprises ozone.

10. Machine as in any claim hereinbefore, **characterized in that** it comprises a sieving station (12) disposed between said granulation station (11) and said packaging station (13), and able to sieve said grated food product in order to select a part thereof with desired characteristics of size, and **in that** said blowing unit (16) is disposed integrated with said granulation station (11) and upstream of said sieving station (12).

11. Machine as in any claim hereinbefore, **characterized in that** said packaging station (13) comprises a second blowing unit (30) able to blow said gas in order to package said grated food product in a protected environment.

12. Machine as in claim 2, **characterized in that** it also comprises shearing means (35) disposed downstream of said granulation means (19) and in any case inside said grating tank (28), and able to crush further the grated product arriving from said granulation means (19), so that, at outlet from said grating tank (28), a grated product emerges with a substantially uniform granulometry.

13. Machine as in claim 12, **characterized in that** said shearing means comprises a shearing roller (35) mounted rotatable in said grating tank (28) and radially provided with a plurality of blades (37).

14. Machine as in any claim hereinbefore, **characterized in that** it comprises at least two introduction pipes (38, 39) connected to said granulation station (11) and able to allow the introduction of a relative compact mass of food product inside said granulation station (11).

15. Machine as in any claim hereinbefore, **characterized in that** said blowing unit comprises a plurality of nozzles (16) disposed in correspondence with said granulation means (19).

16. Machine as in claim 12 or 13, **characterized in that** said blowing unit comprises a plurality of nozzles (16) disposed downstream of said granulation means (19) and upstream of said shearing means (35).

17. Machine as in claim 12 or 13, **characterized in that** said blowing unit comprises a plurality of nozzles (16) disposed in correspondence with said shearing means (35).

18. Method for packaging a grated food product comprising a granulation step (31), performed in a granulation station (11), in which a determinate compact mass of said food product is grated, and a packaging step (33), performed in a packaging station (13), in which a mass of grated and sifted food product is disposed in a determinate package (27), wherein, before said packaging step (33), it comprises a blowing step (32) in which a gas is blown uniformly onto said grated food product, **characterized in that** said blowing step (32) is effected on said grated food product at the same time as said granulation step (31) so as to achieve an environment that prevents the proliferation of bacteria and other noxious micro-organisms, the grated food product, treated with the gas, being transported from said granulation station (11) to said packaging station (13) by means of a transfer pipe (15) which is able to guarantee that, inside it, an atmosphere sufficiently saturated with the gas blown of the blowing step (32) is maintained, so as to keep the grated food product in a controlled atmosphere, which prevents the proliferation of bacteria and noxious micro-organisms.

19. Method as in claim 18, **characterized in that** said granulation step (31) is effected in a grating tank (28) and **in that** said blowing step (32) is effected in said grating tank (28) while said granulation step (31) is effected.

20. Method as in any claim 18 or 19, **characterized in that** said gas is blown uniformly onto said food product at least while said food product is being grated.

21. Method as in any claim from 18 to 20, **characterized in that** said gas is blown uniformly onto said food product also after said food product has been grated.

22. Method as in any claim from 18 to 21, **characterized in that** downstream of said granulation step (31), it comprises at least a second shearing step in which, by means of shearing means (35) disposed downstream of the granulation means (19), the grated product is further crushed.

## Patentansprüche

1. Maschine zum Abpacken eines geriebenen Nahrungsmittelproduktes, mit zumindest einer Granulierstation (11), die zum Reiben eines vorgegebenen kompakten Volumens des Nahrungsmittelproduktes ausgelegt ist, einer Abpackstation (13), welche ein Volumen von geriebenem und gesiebtem Nahrungsmittelprodukt in einer vorgegebenen Packung (27) anordnet, und einer Einheit (16) zum Blasen eines Gases, welche der Granulierstation (11) zugeordnet ist und sich generell stromaufwärts von der Abpackstation (13) befindet, und welche dazu geeignet ist, das Gas gleichförmig auf das Produkt zu blasen, bevor es abgepackt ist, **dadurch gekennzeichnet, dass** die Blaseinheit (16) unmittelbar mit der Granulierstation (11) zusammengelegt ist, um das Gas auf das Produkt zu blasen, zumindest während das Produkt einem Reiben in der Granulierstation (11) unterzogen ist, um eine Umgebung zu erhalten, welche die Verbreitung von Bakterien und anderen schädlichen Mikroorganismen verhindert, wobei die Maschine ferner zumindest ein Übertragungsrohr (15) aufweist, das sicher stellen kann, dass eine mit dem Gas im Wesentlichen gesättigte Atmosphäre innerhalb des Rohres (15) aufrecht erhalten wird, und ferner dazu geeignet ist, das geriebene und dem Blasen des Gases unterzogene Nahrungsmittelprodukt von der Granulierstation (11) zur Abpackstation (13) zu transportieren.

2. Maschine nach Anspruch 1, **dadurch gekennzeichnet, dass** die Granulierstation (11) eine Reibewanne (28) aufweist, in der eine Granuliereinrichtung (19) angeordnet ist, die dazu geeignet ist, das Nahrungsmittelprodukt zu granulieren oder zu reiben, und in der die Blaseinheit (16) auf im Wesentlichen fluiddichte Weise direkt mit der Reibewanne (28) verbindbar ist, um das Gas gleichzeitig mit dem Granulieren des Nahrungsmittelproduktes in die Reibewanne (28) zu blasen.

3. Maschine nach einem der vorherigen Ansprüche, **dadurch gekennzeichnet, dass** die Blaseinheit eine oder mehrere Düsen (16) aufweist, die auf das Nahrungsmittelprodukt hin richtbar sind und das Gas auf das Nahrungsmittelprodukt blasen können.

4. Maschine nach Anspruch 3, **dadurch gekennzeichnet, dass** die Düsen (16) in der Granulierstation (11) geöffnet werden können.

5. Maschine nach einem der vorherigen Ansprüche, **dadurch gekennzeichnet, dass** das Übertragungsrohr (15) ein Förderband (22) aufweist, auf dem das geriebene Nahrungsmittelprodukt fortlaufend abgelegt wird, sowie ein hermetisches Abdeckelement (23), welches dem Förderband (22) zugeordnet ist, um ein internes Abteil (25) für die Übertragung des geriebenen Nahrungsmittelproduktes zu begrenzen.

6. Maschine nach einem der vorherigen Ansprüche, **dadurch gekennzeichnet, dass** das Gas ein oder mehrere Gase beinhaltet, das/die aus einer Kohlendioxid, Stickstoff, Ozon oder Mischungen davon umfassenden Gruppe ausgewählt ist/sind.

7. Maschine nach einem der Ansprüche 1 bis 5, **dadurch gekennzeichnet, dass** das Gas ein inertes Gas ist, das aus einer Kohlendioxid, Stickstoff oder Mischungen davon umfassenden Gruppe ausgewählt ist.

8. Maschine nach einem der Ansprüche 1 bis 5, **dadurch gekennzeichnet, dass** das Gas ein Gas mit bakteriostatischer, bakterizidischer und/oder antibakterieller Wirkung ist.

9. Maschine nach Anspruch 8, **dadurch gekennzeichnet, dass** das Gas Ozon aufweist.

10. Maschine nach einem der vorherigen Ansprüche, **dadurch gekennzeichnet, dass** sie eine Siebestation (12) aufweist, die zwischen der Granulierstation (11) und der Abpackstation (13) angeordnet ist und in der Lage ist, das geriebene Nahrungsmittelprodukt zu sieben, um einen Teil davon zu selektieren, der gewünschte Größeneigenschaften aufweist, sowie dadurch, dass die Blaseinheit (16) mit der Granulierstation (11) zusammengelegt und stromaufwärts von der Siebestation (12) angeordnet ist.

11. Maschine nach einem der vorherigen Ansprüche, **dadurch gekennzeichnet, dass** die Abpackstation (13) eine zweite Blaseinheit (30) aufweist, die das Gas derart blasen kann, dass das geriebene Nahrungsmittelprodukt in einer geschützten Umgebung abgepackt wird.

12. Maschine nach Anspruch 2, **dadurch gekennzeichnet, dass** sie ferner eine Schereinrichtung (35) aufweist, die stromabwärts von der Granuliereinrichtung (19) und generell im Inneren der Reibewanne (28) angeordnet ist und dazu geeignet ist, das von der Granuliereinrichtung (19) her ankommende, geriebene Produkt weiter zu brechen, so dass am Auslass aus der Reibewanne (28) ein geriebenes Produkt mit einer im Wesentlichen gleichförmigen Granulometrie austritt.

13. Maschine nach Anspruch 12, **dadurch gekennzeichnet, dass** die Schereinrichtung eine Scherwalze (35) aufweist, die drehbar in der Reibewanne (28) gelagert und radial mit einer Mehrzahl von Messern (37) versehen ist.

14. Maschine nach einem der vorherigen Ansprüche, **dadurch gekennzeichnet, dass** sie mindestens zwei Einführungsrohre (38, 39) aufweist, die mit der Granulierstation (11) verbunden sind und dazu geeignet sind, die Einführung eines relativ kompakten Volumens von Nahrungsmittelprodukt in die Granulierstation (11) zuzulassen.

15. Maschine nach einem der vorherigen Ansprüche, **dadurch gekennzeichnet, dass** die Blaseinheit eine Mehrzahl von Düsen (16) aufweist, die in Entsprechung zu der Granuliereinrichtung (19) angeordnet sind.

16. Maschine nach Anspruch 12 oder 13, **dadurch gekennzeichnet, dass** die Blaseinheit eine Mehrzahl von Düsen (16) aufweist, die stromabwärts von der Granuliereinrichtung (19) und stromaufwärts von der Schereinrichtung (35) angeordnet sind.

17. Maschine nach Anspruch 12 oder 13, **dadurch gekennzeichnet, dass** die Blaseinheit eine Mehrzahl von Düsen (16) aufweist, die in Entsprechung zu der Schereinrichtung (35) angeordnet sind.

18. Verfahren zum Abpacken eines geriebenen Nahrungsmittelproduktes, umfassend einen Granulierschritt (31), der in einer Granulierstation (11) durchgeführt wird und in dem ein vorgegebenes kompaktes Volumen des Nahrungsmittelproduktes gerieben wird, und einen Abpackschritt (33), der in einer Abpackstation (13) durchgeführt wird und in dem ein Volumen von geriebenem und gesiebtem Nahrungsmittelprodukt in einer vorgegebenen Packung (27) angeordnet wird, wobei es vor dem Abpackschritt (33) einen Blasschritt (32) umfasst, in dem ein Gas gleichförmig auf das geriebene Nahrungsmittelprodukt geblasen wird, **dadurch gekennzeichnet, dass** der Blasschritt (32) an dem geriebenen Nahrungsmittelprodukt zur gleichen Zeit wie der Granulierschritt (31) vorgenommen wird, um eine Umgebung zu erhalten, welche die Verbreitung von Bakterien und anderen schädlichen Mikroorganismen verhindert, das geriebene und mit dem Gas behandelte Nahrungsmittelprodukt von der Granulierstation (11) zu der Abpackstation (13) mittels eines Übertragungsrohres (15) transportiert wird, das sicher stellen kann, dass in seinem Inneren eine Atmosphäre aufrecht erhalten wird, die ausreichend mit dem verblasenen Gas des Blasschrittes (32) gesättigt ist, um das geriebene Nahrungsmittelprodukt in einer kontrollierten Atmosphäre zu halten, welche die Verbreitung von Bakterien und schädlichen Mikroorganismen verhindert.

19. Verfahren nach Anspruch 18, **dadurch gekennzeichnet, dass** der Granulierschritt (31) in einer Reibewanne (28) durchgeführt wird, und dass der Blasschritt (32) in der Reibewanne (28) während der Durchführung des Granulierschrittes (31) durchgeführt wird.

20. Verfahren nach einem der Ansprüche 18 oder 19, **dadurch gekennzeichnet, dass** das Gas zumindest während des Reibens des Nahrungsmittelproduktes gleichförmig auf das Nahrungsmittelprodukt geblasen wird.

21. Verfahren nach einem der Ansprüche 18 bis 20, **dadurch gekennzeichnet, dass** das Gas auch nach dem Reiben des Nahrungsmittelproduktes gleichförmig auf das Nahrungsmittelprodukt geblasen wird.

22. Verfahren nach einem der Ansprüche 18 bis 21, **dadurch gekennzeichnet, dass** es stromabwärts von dem Granulierschritt (31) zumindest einen zweiten Scherschritt aufweist, in dem das geriebene Produkt mittels einer stromabwärts von der Granuliereinrichtung (19) angeordneten Schereinrichtung (35) weiter gebrochen wird.

## Revendications

1. Machine d'emballage d'un produit alimentaire râpé, comprenant au moins un poste de granulation (11) de forme conçue pour râper une masse compacte déterminée dudit produit alimentaire, un poste d'emballage (13) destiné à placer une masse de produit alimentaire râpé et tamisé dans un emballage déterminé (27) et une installation (16) de soufflage d'un gaz, laquelle est associée audit poste de granulation (11), placée dans tous les cas de figure en amont dudit poste d'emballage (13) et apte à souffler uniformément ledit gaz sur le produit avant qu'il ne soit emballé, **caractérisée en ce que** ladite installation de soufflage (16) est directement intégrée audit poste de granulation (11) afin de souffler ledit gaz sur ledit produit, au moins pendant que ledit produit est en cours de râpage dans ledit poste de granulation (11), de manière à créer un milieu empêchant la prolifération de bactéries et d'autres micro-organismes nocifs, ladite machine comprenant également au moins un tuyau de transfert (15) capable de garantir le maintien d'une atmosphère sensiblement saturée dudit gaz à l'intérieur dudit tuyau (15), et capable également de transporter ledit produit alimentaire, râpé et soumis au soufflage dudit gaz, depuis ledit poste de granulation (11) jusqu'audit poste d'emballage (13).

2. Machine selon la revendication 1, **caractérisée en ce que** ledit poste de granulation (11) comprend un réservoir de râpage (28) dans lequel est placé un moyen de granulation (19) capable de granuler ou de râper ledit produit alimentaire, et dans lequel ladite installation de soufflage (16) peut être raccordée directement, de manière sensiblement étanche aux liquides, audit réservoir de râpage (28) afin de souffler ledit gaz dans ledit réservoir de râpage (28) en même temps que la granulation dudit produit alimentaire.

3. Machine selon l'une quelconque des revendications précédentes, **caractérisée en ce que** ladite installation de soufflage comprend une ou plusieurs buses (16) pouvant être dirigées vers ledit produit alimentaire et pouvant souffler ledit gaz sur ce dernier.

4. Machine selon la revendication 3, **caractérisée en ce qu'**il est possible d'ouvrir lesdites buses (16) à l'intérieur dudit poste de granulation (11).

5. Machine selon l'une quelconque des revendications précédentes, **caractérisée en ce que** ledit tuyau de transfert (15) comprend une bande transporteuse (22) sur laquelle est déposé progressivement ledit produit alimentaire râpé, et un élément formant couvercle hermétique (23), associé à ladite bande transporteuse (22), afin de définir un compartiment interne (25) pour le transfert dudit produit alimentaire râpé.

6. Machine selon l'une quelconque des revendications précédentes, **caractérisée en ce que** ledit gaz comprend un ou plusieurs gaz choisis dans le groupe constitué du dioxyde de carbone, de l'azote, de l'ozone ou de leurs mélanges.

7. Machine selon l'une quelconque des revendications 1 à 5, **caractérisée en ce que** ledit gaz est un gaz inerte choisi dans le groupe constitué du dioxyde de carbone, de l'azote ou de leurs mélanges.

8. Machine selon l'une quelconque des revendications 1 à 5, **caractérisée en ce que** ledit gaz est un gaz à fonction bactériostatique, bactéricide et/ou antibactérienne.

9. Machine selon la revendication 8, **caractérisée en ce que** ledit gaz comprend de l'ozone.

10. Machine selon l'une quelconque des revendications précédentes, **caractérisée en ce qu'**elle comprend un poste de tamisage (12) placé entre ledit poste de granulation (11) et ledit poste d'emballage (13), et capable de tamiser ledit produit alimentaire râpé afin d'en sélectionner une partie possédant les caractéristiques dimensionnelles souhaitées, et **en ce que** ladite installation de soufflage (16) se trouve intégrée audit poste de granulation (11), en amont dudit poste de tamisage (12).

11. Machine selon l'une quelconque des revendications précédentes, **caractérisée en ce que** ledit poste d'emballage (13) comprend une seconde installation de soufflage (30) capable de souffler ledit gaz afin d'emballer ledit produit alimentaire râpé dans un milieu protégé.

12. Machine selon la revendication 2, **caractérisée en ce qu'**elle comprend aussi un moyen de découpe (35) placé en aval dudit moyen de granulation (19) et, dans tous les cas de figure, à l'intérieur dudit réservoir de râpage (28), et capable de broyer davantage le produit râpé arrivant dudit moyen de granulation (19) de façon à ce qu'il ressorte dudit réservoir de râpage (28) un produit râpé de granulométrie sensiblement régulière.

13. Machine selon la revendication 12, **caractérisée en ce que** ledit moyen de découpe comprend un cylindre de découpe (35) monté tournant dans ledit réservoir de râpage (28) et doté d'une pluralité de lames radiales (37).

14. Machine selon l'une quelconque des revendications précédentes, **caractérisée en ce qu'**elle comprend au moins deux tuyaux d'introduction (38, 39) raccordé audit poste de granulation (11) et permettant d'introduire une certaine masse compacte de produit alimentaire à l'intérieur dudit poste de granulation (11).

15. Machine selon l'une quelconque des revendications précédentes, **caractérisée en ce que** ladite installation de soufflage comprend une pluralité de buses (16) placées en correspondance avec ledit moyen de granulation (19).

16. Machine selon la revendication 12 ou 13, **caractérisée en ce que** ladite installation de soufflage comprend une pluralité de buses (16) placées en aval dudit moyen de granulation (19) et en amont dudit moyen de découpe (35).

17. Machine selon la revendication 12 ou 13, **caractérisée en ce que** ladite installation de soufflage comprend une pluralité de buses (16) placées en correspondance avec ledit moyen de découpe (35).

18. Procédé d'emballage d'un produit alimentaire râpé, comprenant une étape de granulation (31), réalisée dans un poste de granulation (11), consistant à râper une masse compacte déterminée dudit produit alimentaire, et une étape d'emballage (33), réalisée dans un poste d'emballage (13), consistant à placer une masse de produit alimentaire râpé et tamisé dans un emballage déterminé (27), procédé comprenant, avant ladite étape d'emballage (33), une étape de soufflage (32) consistant à souffler uniformément un gaz sur ledit produit alimentaire râpé, **caractérisé en ce que** ladite étape de soufflage (32) est effectuée sur ledit produit alimentaire râpé en même temps que ladite étape de granulation (31) de manière à créer un milieu empêchant la prolifération de bactéries et d'autres micro-organismes nocifs, le produit alimentaire râpé et traité par le gaz étant transporté dudit poste de granulation (11) audit poste d'emballage (13) au moyen d'un tuyau de transfert (15) capable de garantir à l'intérieur de ce dernier le maintien d'une atmosphère suffisamment saturée en gaz soufflé à l'étape de soufflage (32) de manière à conserver le produit alimentaire râpé dans une atmosphère contrôlée qui empêche la prolifération de bactéries et de micro-organismes nocifs.

19. Procédé selon la revendication 18, **caractérisé en ce que** ladite étape de granulation (31) s'effectue dans un réservoir de râpage (28) et **en ce que** ladite étape de soufflage (32) s'effectue dans ledit réservoir de râpage (28), en même temps que ladite étape de granulation (31).

20. Procédé selon la revendication 18 ou 19, **caractérisé en ce que** ledit gaz est soufflé uniformément sur ledit produit alimentaire au moins pendant le râpage de ce dernier.

21. Procédé selon l'une quelconque des revendications 18 à 20, **caractérisé en ce que** ledit gaz est également soufflé uniformément sur ledit produit alimentaire après le râpage de ce dernier.

22. Procédé selon l'une quelconque des revendications 18 à 21, **caractérisé en ce qu'**en aval de ladite étape de granulation (31), il comprend au moins une seconde étape de découpe pendant laquelle le produit râpé est broyé davantage à l'aide d'un moyen de découpe (35) placé en aval du moyen de granulation (19).
